# EUROPEAN PATENT SPECIFICATION

(11) **EP 4 289 890 B1**
(45) Date of publication and mention of the grant of the patent: **25.11.2026**
(21) Application number: 22749533.0
(22) Date of filing: 24.01.2022
(51) Int. Cl.: H01G 4/18, H01G 4/32, C08J 5/18, B32B 15/085, B29C 55/12, B32B 27/32

(54) **POLYPROPYLENE FILM, METAL LAYER-INTEGRATED POLYPROPYLENE FILM, AND CAPACITOR**
POLYPROPYLENFOLIE, METALLSCHICHTINTEGRIERTE POLYPROPYLENFOLIE UND KONDENSATOR
FILM DE POLYPROPYLÈNE, FILM DE POLYPROPYLÈNE INTÉGRÉ À UNE COUCHE MÉTALLIQUE ET CONDENSATEUR

(30) Priority: 02.02.2021 JP 2021014856
(43) Date of publication of application: 13.12.2023
(73) Proprietor: Oji Holdings Corporation, Chuo-ku Tokyo 104-0061 (JP)
(72) Inventor: NAKATA, Masahiro, Tokyo 104-0061 (JP); SUZUKI, Shigeru, Tokyo 104-0061 (JP)
(74) Representative: Müller-Boré & Partner Patentanwälte PartG mbB
(86) International application number: PCT/JP2022/002453
(87) International publication number: WO 2022/168658

(56) References cited:
- EP-A1- 3 604 403
- WO-A1-2013/146367
- WO-A1-2016/159330
- WO-A1-2019/131815
- CN-A- 107 531 924
- JP-A- 2014 231 584
- US-A1- 2020 198 298
- US-B2- 9 805 868

## Description

### Technical Field

The present invention relates to a polypropylene film for a capacitor.

### Background Art

Polypropylene films have excellent electrical characteristics, such as high voltage resistance and low dielectric loss, and also have high moisture resistance. Therefore, they are widely used in electronic and electrical devices. Specifically, polypropylene films are used, for example, as films for use in high-voltage capacitors, various switching power supplies, filter capacitors (e.g., converters and inverters), smoothing capacitors, and the like.

In particular, polypropylene films are recently beginning to be widely used as capacitors for inverter power supplies that control the drive motors of, for example, electric and hybrid vehicles. Capacitors for inverter power supplies used in vehicles etc. are required to have a small size, light weight, and high capacity, as well as high reliability over a long period of time. WO 2019/131815 A1 and US 9 805 868 B2 disclose polypropylene films for capacitors.

PTL 1 discloses a biaxially stretched polypropylene film for capacitors, wherein the number per 0.1 mm² of protrusions and the ten-point average roughness satisfy a predetermined relationship. As the effects of the biaxially stretched polypropylene film for capacitors with the above configuration, PTL 1 teaches that even though it is a thin film, the film has excellent processing suitability and exhibits high voltage resistance in wide atmospheric temperature conditions from low temperature (-40°C) to high temperature (115°C).

### Citation List

### Patent Literature

PTL 1: WO2013/146367

### Summary of Invention

### Technical Problem

In particular, there is an increasing need for thinner films for on-vehicle capacitors (e.g., for xEVs) due to the demand for smaller size and higher efficiency. However, thin polypropylene films have a problem of low processing suitability; for example, wrinkles and winding deviation are likely to occur in element-winding processing when producing capacitors.

Considering the growing need for reliability over a long period of time, the present inventors focused on the particular importance of not only capacitance stability for long-term use, but also insulation resistance stability under high-temperature and high-voltage application. Capacitance stability and insulation resistance stability refer to small changes from the initial values of capacitance and insulation resistance when a capacitor is used. If the insulation resistance drops significantly under high-temperature and high-voltage application, the leakage current increases rapidly, causing thermal runaway and possibly ultimately causing short circuits and fires.

Accordingly, an object of the present invention is to provide a polypropylene film that makes it possible to obtain not only a capacitor having a certain level of processing suitability and a certain level of capacitance stability for long-term use, but also a capacitor having excellent insulation resistance stability under high-temperature and high-voltage application.

### Solution to Problem

As a result of extensive studies in view of the above object, the present inventors found that the peak extreme height Sxp and the five-point peak height S5p are involved in the three characteristics listed in the object. Then, as a result of further extensive studies, the present inventors found that the above object can be achieved by a polypropylene film having a first surface and a second surface, the arithmetical mean height Sa of the first surface being higher than the arithmetical mean height Sa of the second surface, the first surface having the peak extreme height Sxp of 0.04 to 0.12 µm, and the first surface having the five-point peak height S5p of 0.5 to 1.2 µm. As a result of further studies based on this finding, the present inventors have completed the present invention, which is defined by the appended claims.

### Advantageous Effects of Invention

The present invention can provide a polypropylene film that makes it possible to obtain not only a capacitor having a certain level of processing suitability and a certain level of capacitance stability for long-term use, but also a capacitor having excellent insulation resistance stability under high-temperature and high-voltage application.

### Description of Embodiments

In the present specification, the terms "comprise" and "contain" include the concepts of "comprise," "contain," "substantially consist of," and "consist of."

In the present specification, based on the range composed of the upper limit and/or lower limit described for each parameter, ranges in which the upper limit and/or lower limit are arbitrarily exchanged between a plurality of ranges are also exemplified.

### 1. Polypropylene Film

In one embodiment, the present invention relates to a polypropylene film having a first surface and a second surface, the arithmetical mean height Sa of the first surface being higher than the arithmetical mean height Sa of the second surface, the first surface having the peak extreme height Sxp of 0.04 to 0.12 µm, and the first surface having the five-point peak height S5p of 0.5 to 1.2 µm (in the present specification, also referred to as "the polypropylene film of the present invention"). This is described below.

The polypropylene film of the present invention has a first surface and a second surface, and the arithmetical mean height Sa of the first surface is higher than the arithmetical mean height Sa of the second surface.

The arithmetical mean height Sa of the first surface is not particularly limited. The arithmetical mean height Sa of the first surface is preferably 0.008 to 0.05 µm, more preferably 0.01 to 0.05 µm, even more preferably 0.01 to 0.04 µm, still even more preferably 0.012 to 0.04 µm, and particularly preferably 0.012 to 0.035 µm.

The arithmetical mean height Sa of the second surface is not particularly limited. The arithmetical mean height Sa of the second surface is preferably 0.005 to 0.030 µm, more preferably 0.007 to 0.025 µm, even more preferably 0.008 to 0.020 µm, and still even more preferably 0.009 to 0.020 µm.

The ratio of the arithmetical mean height Sa of the first surface to the arithmetical mean height Sa of the second surface (arithmetical mean height Sa of first surface/arithmetical mean height Sa of second surface) is not particularly limited. This ratio is preferably 1.1 to 2.5, more preferably 1.2 to 2.2, and even more preferably 1.3 to 2.0.

The peak extreme height Sxp of the first surface is 0.04 to 0.12 µm. By satisfying this range and satisfying a predetermined range of the five-point peak height S5p of the first surface described later, a certain level of processing suitability and a certain level of capacitance stability for long-term use can be exhibited, and insulation resistance stability under high-temperature and high-voltage application can also be exhibited well. Although not intended to be a restrictive interpretation, it is considered that by adjusting specific surface roughness parameters (peak extreme height Sxp and five-point peak height S5p) within predetermined ranges, while exhibiting a certain level of processing suitability based on the surface roughness, the gap between the metal layer and the first surface and its shape can be adjusted to make the self-healing effect to an appropriate degree, whereby a certain level of capacitance stability for long-term use can be exhibited, and insulation resistance stability under high-temperature and high-voltage application can be exhibited well. In terms of these characteristics, in a particularly preferred embodiment of the present invention, the peak extreme height Sxp of the first surface is, for example, 0.04 to 0.09 µm, preferably 0.04 to 0.07 µm, more preferably 0.04 to 0.06 µm, even more preferably 0.045 to 0.06 µm, and still even more preferably 0.05 to 0.06 µm.

The peak extreme height Sxp of the second surface is not particularly limited. The peak extreme height Sxp of the second surface is preferably 0.01 to 0.08 µm, more preferably 0.02 to 0.07 µm, and even more preferably 0.025 to 0.06 µm.

The ratio of the peak extreme height Sxp of the first surface to the peak extreme height Sxp of the second surface (peak extreme height Sxp of first surface/peak extreme height Sxp of second surface) is not particularly limited. This ratio is preferably 1.1 to 2.5, more preferably 1.2 to 2.3, and even more preferably 1.3 to 2.1.

The five-point peak height S5p of the first surface is 0.5 to 1.2 µm. By satisfying this range and satisfying a predetermined range of the peak extreme height Sxp of the first surface described above, a certain level of processing suitability and a certain level of capacitance stability for long-term use can be exhibited, and insulation resistance stability under high-temperature and high-voltage application can also be exhibited well. The mechanism thereof is not intended to be interpreted in a limited way, but is considered to be as described above regarding the peak extreme height Sxp. In terms of these characteristics, the five-point peak height S5p of the first surface is preferably 0.5 to 1.0 µm, and more preferably 0.5 to 0.9 µm. In a particularly preferred embodiment of the present invention, the five-point peak height S5p of the first surface is, for example, 0.55 to 0.9, preferably 0.55 to 0.85 µm, more preferably 0.55 to 0.82 µm, even more preferably 0.6 to 0.80 µm, and still even more preferably 0.7 to 0.80 µm.

The five-point peak height S5p of the second surface is not particularly limited. The five-point peak height S5p of the second surface is preferably 0.05 to 0.8 µm, more preferably 0.1 to 0.6 µm, even more preferably 0.15 to 0.5 µm, and still even more preferably 0.2 to 0.5 µm.

The ratio of the five-point peak height S5p of the first surface to the five-point peak height S5p of the second surface (ratio of five-point peak height S5p of first surface/five-point peak height S5p of second surface) is not particularly limited. This ratio is preferably 1.1 to 4.5, more preferably 1.2 to 4.2, and even more preferably 1.3 to 4.1.

The root mean square gradient Sdq of the first surface is not particularly limited. The root mean square gradient Sdq of the first surface is preferably 0.04 to 0.19, more preferably 0.04 to 0.18, and even more preferably 0.05 to 0.17.

The root mean square gradient Sdq of the second surface is not particularly limited. The root mean square gradient Sdq of the second surface is preferably 0.002 to 0.08, more preferably 0.005 to 0.07, even more preferably 0.01 to 0.06, still even more preferably 0.02 to 0.06, and particularly preferably 0.03 to 0.06.

The developed interfacial area ratio Sdr of the first surface is not particularly limited. The developed interfacial area ratio Sdr of the first surface is preferably 0.02 to 0.50%, more preferably 0.06 to 0.45%, even more preferably 0.08 to 0.40%, and still even more preferably 0.08 to 0.30%.

The developed interfacial area ratio Sdr of the second surface is not particularly limited. The developed interfacial area ratio Sdr of the second surface is preferably 0.002 to 0.12%, more preferably 0.003 to 0.10%, even more preferably 0.004 to 0.09%, still even more preferably 0.02 to 0.09%, and particularly preferably 0.05 to 0.09%.

The root-mean-square height Sq of the first surface is not particularly limited. The root-mean-square height Sq of the first surface is preferably 0.02 to 0.12 µm, more preferably 0.02 to 0.10 µm, even more preferably 0.03 to 0.10 µm, still even more preferably 0.03 to 0.08 µm, and particularly preferably 0.03 to 0.07 µm.

The root-mean-square height Sq of the second surface is not particularly limited. The root-mean-square height Sq of the second surface is preferably 0.005 to 0.06 µm, more preferably 0.01 to 0.05 µm, even more preferably 0.01 to 0.04 µm, and still even more preferably 0.02 to 0.04 µm.

The arithmetical mean height Sa, peak extreme height Sxp, five-point peak height S5p, root mean square gradient Sdq, developed interfacial area ratio Sdr, and root-mean-square height Sq are values specified in ISO25178 and are measured as described below. An optical interference-type non-contact surface shape measuring instrument (VertScan 2.0 (model: R5500GML), produced by Ryoka Systems Inc.) is used. Using the WAVE mode, a 530 white filter and a 1×BODY lens barrel are applied, and a 10x objective lens is used to measure 470.92 µm x 353.16 µm per field of view. This operation is performed at 10 locations at 1-cm intervals in a first direction from the center of the target sample (polypropylene film) in both the first direction and a second direction orthogonal to the first direction. Next, the obtained data is subjected to noise removal processing using a median filter (3 x 3), and after that, Gaussian filtering with a cutoff value of 30 µm is performed to remove the waviness component. This enables the condition of the roughened surface to be properly measured. Subsequently, analysis is performed using the plug-in function ISO parameter of analysis software VS-Viewer of VertScan 2.0 to determine Sxp, S5p, Sdq, Sdr, Sa, and Sq for each surface. Finally, an average value is calculated for the values (Sxp, S5p, Sdq, Sdr, Sa, and Sq for each of the first surface and the second surface) obtained at the above 10 locations. The peak extreme height Sxp is determined as the difference in height Sxp = Sdc(p)-Sdc(q) designated at a load area ratio p = 2.5% and q = 50% on the load curve.

The polypropylene film of the present invention has a certain degree of haze value because the peak extreme height Sxp and five-point peak height S5p are within certain ranges. The haze value is not particularly limited, but is, for example, 2.2 to 5.0%, preferably 2.3 to 4.5%, more preferably 2.5 to 4.5%, even more preferably 2.5 to 4.0%, and still even more preferably 2.5 to 3.5%.

The haze value is measured as follows. Using a haze meter (NDH-5000, produced by Nippon Denshoku Industries Co., Ltd.), the haze value is measured according to JIS K 7136:2000. The size of the sample is 50 mm x 100 mm.

The thickness of the polypropylene film of the present invention is preferably 9.5 µm or less, more preferably 6.0 µm or less, even more preferably 3.0 µm or less, still even more preferably 2.9 µm or less, particularly preferably 2.8 µm or less, and further particularly preferably 2.5 µm or less. The thickness of the polypropylene film of the present invention is also preferably 0.8 µm or more, more preferably 1.0 µm or more, even more preferably 1.4 µm or more, still even more preferably 1.5 µm or more, and particularly preferably 1.8 µm or more. In particular, the thickness is preferably within the range of 1.0 to 6.0 µm, 1.0 to 3.0 µm, 1.0 to 2.9 µm, or the like because, although the polypropylene film is very thin, it has excellent slitting processability, blocking suppression during vapor deposition process, and element-winding processability. When the thickness is 9.5 µm or less, the capacitance can be increased, and the polypropylene film of the present invention can thus be suitably used for capacitors. In terms of production, the thickness can be 0.8 µm or more.

The film thickness is measured according to JIS-C2330, except that the thickness is measured at 100 ± 10 kPa using a paper thickness measuring instrument MEI-11, produced by Citizen Seimitsu Co., Ltd.

The polypropylene film of the present invention may be a biaxially stretched film, a uniaxially stretched film, or an unstretched film. Of these, a biaxially stretched film is preferred.

The layer structure of the polypropylene film of the present invention is not particularly limited. The film of the present invention may be a single layer consisting of one layer, or may be multiple layers having the same or different compositions. The polypropylene film of the present invention is preferably a film composed of one or more film-like layers, and more preferably a monolayer film (a film composed of a single film-like layer). The polypropylene film of the present invention contains a polypropylene resin as a main component. In the present specification, containing a polypropylene resin as a main component means that 50 mass% or more of the polypropylene resin is contained based on the entire polypropylene film (when the entire polypropylene film is taken as 100 mass%). The content of the polypropylene resin based on the entire polypropylene film is preferably 75 mass%, and more preferably 90 mass% or more. The upper limit of the content of the polypropylene resin is, for example, 100 mass% or 98 mass% based on the entire polypropylene film.

The polypropylene resin is not particularly limited. One type may be used alone, or two or more types may be used in combination. Preferred among the polypropylene resins is a polypropylene resin that forms β-type spherulites when formed into a cast sheet.

A linear polypropylene resin is preferred, and a linear homopolypropylene resin is more preferred.

The total ash content of the polypropylene resin is preferably as low as possible for electrical characteristics. The total ash content is preferably 50 ppm or less, more preferably 40 ppm or less, and even more preferably 30 ppm or less, based on the polypropylene resin. The lower limit of the total ash content is, for example, 2 ppm or 5 ppm. A lower total ash content means that there are fewer impurities, such as polymerization catalyst residues.

In the polypropylene film of the present embodiment, the polypropylene resin may contain, for example, the following first polypropylene resin alone, and the first polypropylene resin and the following second polypropylene resin in combination.

The polypropylene resin may contain a first polypropylene resin. When the polypropylene resin contains a first polypropylene resin, the content of the first polypropylene resin is preferably 50 wt.% or more, more preferably 55 wt.% or more, and even more preferably 60 wt.% or more, based on 100 wt.% of the polypropylene resin. The upper limit of the content of the first polypropylene resin is, for example, 100 wt.% or less, 99 wt.% or less, 98 wt.% or less, or 95 wt.% or less, based on 100 wt.% of the polypropylene resin, and is preferably 90 wt.% or less, more preferably 85 wt.% or less, and even more preferably 80 wt.% or less, based on 100 wt.% of the polypropylene resin. Thus, the polypropylene film of the present embodiment may contain the first polypropylene resin as a main component. The first polypropylene resin is, for example, isotactic polypropylene.

The weight average molecular weight Mw of the first polypropylene resin is preferably 250,000 or more and less than 400,000, more preferably 260,000 or more and 370,000 or less, and even more preferably 270,000 or more and 350,000 or less. When the Mw is 250,000 or more and less than 400,000, Sxp, S5p, and other various predetermined parameters specified in ISO 25178 for the surface texture of polypropylene films are easily satisfied. Further, when the Mw is 250,000 or more and less than 350,000, it is easy to control the thickness of the cast sheet, and thickness unevenness is less likely to occur.

The number average molecular weight Mn of the first polypropylene resin is preferably 30000 or more and 52000 or less, more preferably 32000 or more and 50000 or less, and even more preferably 34000 or more and 48000 or less. When the number average molecular weight Mn of the first polypropylene resin is 30000 or more and 52000 or less, Sxp, S5p, and other various predetermined parameters specified in ISO 25178 for the surface texture of polypropylene films are easily satisfied.

The z-average molecular weight Mz of the first polypropylene resin is preferably 600000 or more and 1650000 or less, and more preferably 700000 or more and 1600000 or less. When the z-average molecular weight Mz of the first polypropylene resin is 600000 or more and 1650000 or less, Sxp, S5p, and other various predetermined parameters specified in ISO 25178 for the surface texture of polypropylene films are easily satisfied.

The molecular weight distribution (Mw/Mn) of the first polypropylene resin is preferably 5.0 or more, and more preferably 5.5 or more. The Mw/Mn of the first polypropylene resin is preferably 11.0 or less, and more preferably 10.0 or less. When the Mw/Mn of the first polypropylene resin is 5.0 or more and 11.0 or less, Sxp, S5p, and other various predetermined parameters specified in ISO 25178 for the surface texture of polypropylene films are easily satisfied. The molecular weight distribution Mw/Mn is the ratio of the weight average molecular weight Mw to the number average molecular weight Mn.

The molecular weight distribution (Mz/Mn) of the first polypropylene resin is preferably 10 or more and 60 or less, more preferably 12 or more and 50 or less, and even more preferably 15 or more and 45 or less. When the molecular weight distribution (Mz/Mn) of the polypropylene resin is 10 or more and 60 or less, Sxp, S5p, and other various predetermined parameters specified in ISO 25178 for the surface texture of polypropylene films are easily satisfied. The molecular weight distribution Mz/Mn is the ratio of the z-average molecular weight Mz to the number average molecular weight Mn.

In the present specification, the weight average molecular weight (Mw), number average molecular weight (Mn), z-average molecular weight (Mz), and molecular weight distribution (Mw/Mn, and Mz/Mn) of the polypropylene resin are values measured using a gel permeation chromatography (GPC) system. More specifically, these values are measured using a high-temperature GPC system with a built-in differential refractometer (RI) (HLC-8121GPC-HT (trade name), produced by Tosoh Corporation). As GPC columns, three connected TSKgel GMHHR-H(20)HT columns, produced by Tosoh Corporation, are used. The column temperature is set to 140°C, and trichlorobenzene is flown as an eluent at a flow rate of 1.0 ml/10 min to obtain measured values of Mw and Mn. A calibration curve for the molecular weight M is created using a polystyrene standard produced by Tosoh Corporation, and the measurement value is converted to a polypropylene value to obtain Mw, Mn, and Mz.

The melt flow rate (MFR) at 230°C of the first polypropylene resin is preferably 8.0 g/10 min or less, more preferably 7.0 g/10 min or less, and even more preferably 6.0 g/10 min or less. Further, the melt flow rate at 230°C is preferably 3.5 g/10 min or more. The melt flow rate at 230°C is measured according to JIS K 7210-1999 under a load of 2.16 kg at 230°C. The unit "g/10 min" of the melt flow rate is also referred as "dg/min."

The heptane insoluble of the first polypropylene resin is preferably 97.0% or more. The heptane insoluble is preferably 98.5% or less. A higher heptane insoluble indicates higher resin stereoregularity. When the heptane insoluble (HI) is 97.0% or more and 98.5% or less, the moderately high stereoregularity moderately enhances the crystallinity of the polypropylene resin in the polypropylene film, and increases voltage resistance at high temperatures. Furthermore, the rate of solidification (crystallization) is moderate during molding of the cast sheet, and moderate stretchability is imparted. The method for measuring the heptane insoluble (HI) is as described in the Examples.

The total ash content of the first polypropylene resin is preferably as low as possible for electrical characteristics. The total ash content based on the first polypropylene resin is preferably 50 ppm or less, more preferably 40 ppm or less, and even more preferably 30 ppm or less. The lower limit of the total ash content is, for example, 2 ppm or 5 ppm.

The polypropylene resin may further contain a second polypropylene resin. The polypropylene film of the present embodiment preferably contains a second polypropylene resin in addition to the first polypropylene resin. It is more preferable that the resins that form the polypropylene film are the first polypropylene resin and the second polypropylene resin.

When the polypropylene resin contains a second polypropylene resin, the content of the second polypropylene resin is preferably 50 wt.% or less, more preferably 49 wt.% or less, even more preferably 45 wt.% or less, and particularly preferably 40 wt.% or less, based 100 wt.% on of the polypropylene resin. Further, when the polypropylene resin contains a second polypropylene resin, the lower limit of the content of the second polypropylene resin is, for example, 1 wt.% or more, 2 wt.% or more, or 5 wt.% or more, based on 100 wt.% of the polypropylene resin, and is preferably 10 wt.% or more, more preferably 15 wt.% or more, and even more preferably 20 wt.% or more, based on 100 wt.% of the polypropylene resin. The second polypropylene resin is, for example, isotactic polypropylene.

The Mw of the second polypropylene resin is preferably 300,000 or more, and more preferably 350,000 or more. The Mw of the second polypropylene resin is preferably 450,000 or less, and more preferably 400,000 or less.

The Mn of the second polypropylene resin is preferably 40000 or more and 54000 or less, more preferably 42000 or more and 50000 or less, and even more preferably 44000 or more and 48000 or less.

The Mz of the second polypropylene resin is preferably more than 1550000 and 2000000 or less, and more preferably 1580000 or more and 1700000 or less.

In the second polypropylene resin, the ratio of Mw to Mn (Mw/Mn) is preferably 5.5 or more, more preferably 7.0 or more, and particularly preferably 7.5 or more. The upper limit of Mw/Mn in the second polypropylene resin is, for example, 11.0, 10.0, 9.0, or 8.5. Due to the combined use of the first polypropylene resin with the second polypropylene resin in which Mw/Mn and Mw satisfy the above ranges, Sxp, S5p, and other various predetermined parameters specified in ISO 25178 for the surface texture of polypropylene films are easily satisfied.

The ratio of Mz to Mn (Mz/Mn) in the second polypropylene resin is preferably 30 or more and 40 or less, and more preferably 33 or more and 37 or less.

The melt flow rate at 230°C of the second polypropylene resin is preferably less than 4.0 g/10 min, more preferably 3.9 g/10 min or less, and even more preferably 3.8 g/10 min or less. Further, the melt flow rate at 230°C is preferably 1.0 g/10 min or more, more preferably 1.5 g/10 min or more, and even more preferably 2.0 g/10 min or more.

The heptane insoluble of the second polypropylene resin is preferably 97.5% or more, more preferably 98.0% or more, even more preferably more than 98.5%, and particularly preferably 98.6% or more. Further, the heptane insoluble is preferably 99.5% or less, and more preferably 99.0% or less.

The total ash content of the second polypropylene resin is preferably as low as possible for electrical characteristics. The total ash content is preferably 50 ppm or less, more preferably 40 ppm or less, and even more preferably 30 ppm or less, based on the second polypropylene resin. The lower limit of the total ash content is, for example, 2 ppm or 5 ppm.

The total amount of the first polypropylene resin and the second polypropylene resin can be, for example, 90 wt.% or more, 95 wt.% or more, or 100 wt.%, when the entire polypropylene resin is taken as 100 wt.%.

The polypropylene resin can be produced by a commonly known polymerization method. The polymerization method is not particularly limited as long as a polypropylene resin that can be used in the polypropylene film of the present embodiment can be obtained. Examples of the polymerization method include vapor phase polymerization, bulk polymerization, and slurry polymerization.

The polymerization may be single-stage (mono-stage) polymerization using one polymerization reactor, or may be multi-stage polymerization using at least two or more polymerization reactors. Further, hydrogen or a comonomer as a molecular weight modifier may be added to a reactor to perform polymerization.

As a catalyst for polymerization, a commonly known Ziegler-Natta catalyst can be used, and the catalyst is not particularly limited as long as the polypropylene resin can be obtained. The catalyst may contain a co-catalyst component or a donor. The molecular weight, molecular weight distribution, etc. can be controlled by adjusting the catalyst and the polymerization conditions.

The molecular weight, molecular weight distribution, etc. of the polypropylene resin can be adjusted, for example, by appropriately selecting (I) the polymerization method and the conditions such as temperature and pressure during polymerization, (ii) the form of the reactor during polymerization, (iii) the presence or absence, type, and amount of additives, and (iv) the type and amount of catalyst.

Specifically, the molecular weight, molecular weight distribution, etc. of the polypropylene resin can be adjusted, for example, by a multi-stage polymerization reaction. Examples of the multi-stage polymerization reaction include the method described below.

First, in the first polymerization step, propylene and a catalyst are supplied to a first polymerization reactor. Together with these components, hydrogen as a molecular weight modifier is mixed in an amount necessary to reach the required molecular weight of the polymer. For example, in the case of slurry polymerization, the reaction temperature is about 70 to 100°C, and the retention time is about 20 minutes to 100 minutes. A plurality of reactors can be used in series, for example. In this case, the polymerization product of the first step is continuously fed to the next reactor together with additional propylene, catalyst, and molecular weight modifier. Subsequently, the second polymerization is performed while adjusting the molecular weight lower or higher than the first polymerization step. By adjusting the yield (production) of the first and second reactors, it is possible to adjust the composition (configuration) of the high-molecular-weight and low-molecular-weight components.

In addition, the molecular weight, molecular weight distribution, etc. of the polypropylene resin can also be adjusted by peroxide decomposition. For example, peroxide treatment with a decomposing agent, such as hydrogen peroxide or an organic peroxide, can be used.

When a peroxide is added to a degradable polymer, such as polypropylene, a hydrogen abstraction reaction from the polymer occurs, and some of the resulting polymer radicals recombine and cause a crosslinking reaction; however, most radicals undergo secondary decomposition (β-cleavage) and split into two polymers with a lower molecular weight. That is, higher-molecular-weight components are more likely to undergo decomposition. As a result, the low-molecular-weight components increase, and the composition of molecular weight distribution can be adjusted.

When adjusting the content of lower-molecular-weight components by blending (resin mixing), it is preferable to dry-mix or melt-mix at least two or more resins with different molecular weights. In general, a two-polypropylene mixed system, in which a main resin is mixed with about 1 to 40 mass% of an additive resin having a higher or lower average molecular weight than the main resin, is preferably used because the amount of low-molecular-weight components can be easily adjusted.

In the case of this mixing adjustment, the melt flow rate (MFR) may be used as a measure of the average molecular weight. In this case, the difference in MFR between the main resin and the additive resin is preferably about 1 to 30 g/10 min, in terms of convenience in adjustment.

A commercial product can also be used as the polypropylene resin.

The polypropylene film of the present invention may contain a resin other than the polypropylene resin (hereinafter also referred to as "other resin"). The "other resin" is not particularly limited as long as it is generally a resin other than the polypropylene resin as a main component and the target polypropylene film can be obtained. Examples of the other resin include polyolefins other than polypropylene, such as polyethylene, poly(1-butene), polyisobutene, poly(1-pentene), and poly(1-methylpentene); copolymers of α-olefins, such as an ethylene-propylene copolymer, a propylene-butene copolymer, and an ethylene-butene copolymer; vinyl monomer-diene monomer random copolymers, such as a styrene-butadiene random copolymer; and vinyl monomer-diene monomer-vinyl monomer random copolymers, such as a styrene-butadiene-styrene block copolymer. The polypropylene film of the present invention may contain the other resin in an amount that does not adversely affect the target polypropylene film. The polypropylene film of the present invention may contain the other resin in an amount of preferably 10 parts by mass or less, and more preferably 5 parts by mass or less, based on 100 parts by mass of the polypropylene resin. Further, the polypropylene film of the present invention may contain the other resin in an amount of preferably 0.1 parts by mass or more, and more preferably 1 part by mass or more, based on 100 parts by mass of the polypropylene resin.

In addition to the resin components, the polypropylene film of the present invention may further contain at least one additive. The "additive" is not particularly limited as long as it is generally used for polypropylene and the target polypropylene film can be obtained. Examples of additives include nucleating agents (α-crystal nucleating agents and β-crystal nucleating agents), necessary stabilizers such as antioxidants, chlorine absorbers, and ultraviolet absorbers, lubricants, plasticizers, flame retardants, antistatic agents, inorganic fillers, organic fillers, and the like. Examples of inorganic fillers include barium titanate, strontium titanate, aluminum oxide, and the like. When such an additive is used, it can be contained in an amount that does not adversely affect the target polypropylene film.

The "nucleating agent" is not particularly limited as long as it is generally used for polypropylene and the target polypropylene film can be obtained.

Examples of nucleating agents include α-crystal nucleating agents that preferentially nucleate α-crystals, and β-crystal nucleating agents that preferentially nucleate β-crystals.

Among α-crystal nucleating agents, examples of organic nucleating agents include dispersion-type nucleating agents and dissolution-type nucleating agents. Examples of dispersion-type nucleating agents include phosphate metal salt-based nucleating agents, carboxylic acid metal salt-based nucleating agents, rosin metal salt-based nucleating agents, and the like. Examples of dissolution-type nucleating agents include sorbitol-based nucleating agents, nonitol-based nucleating agents, xylitol-based nucleating agents, amide-based nucleating agents, and the like.

Examples of β-crystal nucleating agents include amide-based nucleating agents, di- or polycarboxylic acid metal salt-based nucleating agents, quinacridone-based nucleating agents, aromatic sulfonic acid-based nucleating agents, phthalocyanine-based nucleating agents, tetraoxaspiro compound-based nucleating agents, and the like.

The nucleating agent may be dry-blended or melt-blended with a polypropylene raw material and pelletized, or may be fed into an extruder together with polypropylene pellets. Due to the use of a nucleating agent, the surface roughness of the film can be adjusted to the desired roughness. Examples of typical commercial products of nucleating agents include NJSTAR NU-100, produced by New Japan Chemical Co., Ltd., as a β-crystal nucleating agent. When the polypropylene film of the present invention contains a β-crystal nucleating agent, the content thereof is preferably 1 to 1000 mass ppm, and more preferably 50 to 600 mass ppm, based on the mass of the resin components (the mass of the resin components as a whole).

The "antioxidant" is not particularly limited as long as it is generally called an antioxidant and used for polypropylene and the target polypropylene film can be obtained. The antioxidant is generally used for two purposes. One purpose is to inhibit thermal degradation and oxidative degradation inside an extruder. The other purpose is to inhibit deterioration of a capacitor film during long-term use and contribute to enhancing the capacitor performance. An antioxidant that inhibits thermal degradation and oxidative degradation inside an extruder is referred to as a "primary agent," and an antioxidant that contributes to enhancing the capacitor performance is referred to as a "secondary agent."

Two types of antioxidants may be used for these two purposes, or one type of antioxidant may be used for these two purposes.

The primary agent is, for example, 2,6-di-tertiarybutyl-para-cresol (generic name: BHT). The primary agent can be generally added during preparation of a polypropylene resin composition explained in the method for producing a polypropylene film described later, for the purpose of inhibiting thermal degradation and oxidative degradation inside an extruder. The antioxidant added to the polypropylene resin composition for this purpose is mostly consumed during a formation step in an extruder and hardly remains in the film after the film formation. Therefore, when the polypropylene film of the present invention contains a primary agent, the content thereof is generally less than 100 mass ppm based on the mass of the resin components (the mass of the resin components as a whole).

As the secondary agent, a hindered phenol-based antioxidant having a carbonyl group can be used.

The "hindered phenol-based antioxidant having a carbonyl group" is not particularly limited as long as it is generally called a hindered phenol-based antioxidant having a carbonyl group and the target polypropylene film can be obtained.

Examples of the hindered phenol-based antioxidant having a carbonyl group include triethylene glycol-bis[3-(3-tertiary-butyl-5-methyl-4-hydroxyphenyl)propionate] (trade name: Irganox 245), 1,6-hexanediol-bis[3-(3,5-di-tertiary-butyl-4-hydroxyphenyl)propionate] (trade name: Irganox 259), pentaerythrityl-tetrakis[3-(3,5-di-tertiary-butyl-4-hydroxyphenyl)propionate] (trade name: Irganox 1010), 2,2-thio-diethylenebis[3-(3,5-di-tertiary-butyl-4-hydroxyphenyl)propionate] (trade name: Irganox 1035), octadecyl-3-(3,5-di-tertiary-butyl-4-hydroxyphenyl)propionate (trade name: Irganox 1076), and N,N'-hexamethylenebis(3,5-di-tertiary-butyl-4-hydroxy-hydrocinnamide) (trade name: Irganox 1098). Of these, pentaerythrityl-tetrakis[3-(3,5-di-tertiary-butyl-4-hydroxyphenyl)propionate] is particularly preferable because of its high molecular weight, high compatibility with polypropylene, low volatility, and excellent heat resistance.

The polypropylene film of the present invention may contain one or more hindered phenol-based antioxidants having a carbonyl group (secondary agents), for the purpose of inhibiting deterioration from proceeding over time during long-term use. When the polypropylene film of the present invention contains one or more hindered phenol-based antioxidants having a carbonyl group, the content thereof is preferably 2000 mass ppm or more and 6000 mass ppm or less, and more preferably 3000 mass ppm or more and 6000 mass ppm or less, based on the mass of the resin components (the mass of the resin components as a whole). The content of the hindered phenol-based antioxidant having a carbonyl group in the film is preferably 2000 mass ppm or more and 6000 mass ppm or less, in terms of appropriate effect expression.

A polypropylene film that contains an optimal, specific amount of the hindered phenol-based antioxidant having a carbonyl group, which has suitable compatibility with polypropylene on a molecular scale, is preferable because the polypropylene film exhibits enhanced long-term durability.

The "chlorine absorber" is not particularly limited as long as it is generally called a chlorine absorber and used for polypropylene and the target polypropylene film can be obtained. Examples of chlorine absorbers include metal soaps, such as calcium stearate. When such a chlorine absorber is used, it may be contained in an amount that does not adversely affect the target polypropylene film.

### 2. Method for Producing Polypropylene Film

The polypropylene film of the present invention is preferably biaxially stretched, as described above. When the polypropylene film of the present invention is a biaxially stretched polypropylene film, the biaxially stretched polypropylene film can be produced by a commonly known method for producing biaxially stretched polypropylene films. For example, the biaxially stretched polypropylene film can be produced by producing a cast sheet from a polypropylene resin composition obtained by mixing a first polypropylene resin and a second polypropylene resin, or a first polypropylene resin, optionally with other resins, additives, etc., and then biaxially stretching the cast sheet.

As described later, the polypropylene film of the present invention can be obtained by setting the heating melting temperature in the production of the cast sheet to a relatively high temperature, setting the cooling drum temperature in the production of the cast sheet to a relatively high temperature, setting the longitudinal stretching temperature to a relatively high temperature, and appropriately adjusting other stretching conditions. Further, the polypropylene film of the present invention can be effectively obtained by setting the heating melting temperature in the production of the cast sheet to a relatively high temperature, and setting the cooling drum temperature in the production of the cast sheet or the longitudinal stretching temperature to a relatively high temperature.

### 2-1. Preparation of Polypropylene Resin Composition

The method for preparing the polypropylene resin composition is not particularly limited. Examples of the method include a method comprising dry-blending a polymer powder or pellets of the first polypropylene resin and the second polypropylene resin, or the first polypropylene resin, optionally with other resins, additives, etc. using a mixer or the like; and a method comprising supplying a polymer powder or pellets of the first polypropylene resin and the second polypropylene resin, or the first polypropylene resin, optionally together with other resins, additives, etc. to a kneader, followed by melting and kneading to thereby obtain a melt-blended resin composition.

The mixer and kneader are not particularly limited. The kneader can be any of a single-screw type kneader, a two-screw type kneader, or a multi-screw type kneader having three or more screws. When a kneader having two or more screws is used, the type of kneading may be rotation in the same direction or different directions.

In the case of blending by melting and kneading, the kneading temperature is not particularly limited as long as sufficient kneading is achieved. The temperature is preferably within a range of 170 to 320°C, more preferably within a range of 200°C to 300°C, and even more preferably within a range of 230°C to 270°C. In order to prevent resin degradation during kneading and mixing, the kneader may be purged with an inert gas, such as nitrogen. The molten kneaded resin may be pelletized into a suitable size using a commonly known pelletizer. As a result, melt-blended resin composition pellets can be obtained.

In the preparation of the polypropylene resin composition, the primary agent as an antioxidant described in the above item of additives can be added, for the purpose of inhibiting thermal degradation and oxidative degradation in an extruder.

When the polypropylene resin composition contains a primary agent, the content thereof is preferably 1000 mass ppm to 5000 mass ppm based on the mass of the resin components (the mass of the resin components as a whole). The antioxidant for this purpose is mostly consumed during a formation step in an extruder and hardly remains in the film after the film formation.

The hindered phenol-based antioxidant having a carbonyl group described in the above item of additives can be added as a secondary agent to the polypropylene resin composition.

When the polypropylene resin composition contains a hindered phenol-based antioxidant having a carbonyl group, the content thereof is preferably 100 mass ppm to 10000 mass ppm, and more preferably 3000 mass ppm to 7000 mass ppm, based on the mass of the resin components (the mass of the resin components as a whole). Not a little amount of the hindered phenol-based antioxidant having a carbonyl group is also consumed in the extruder.

When the polypropylene resin composition does not contain the primary agent, a larger amount of the hindered phenol-based antioxidant having a carbonyl group can be used. This is because the amount of the hindered phenol-based antioxidant having a carbonyl group consumed in the extruder increases. When the polypropylene resin composition does not contain the primary agent but contains the hindered phenol-based antioxidant having a carbonyl group, the content thereof is 4000 mass ppm to 8000 mass ppm or less based on the mass of the resin components (the mass of the resin components as a whole).

### 2-2. Production of Cast Sheet

The cast sheet can be obtained in such a manner that pellets of a dry-blended resin composition and/or a melt-blended resin composition produced in advance are supplied to an extruder, heated and melted, and passed through a filtration filter, melted by heating at a relatively high temperature, preferably 255°C to 320°C, more preferably 260°C to 300°C, and even more preferably 265 to 280°C, melt-extruded from a T-die, and cooled and solidified with at least one or more metal drums kept at a relatively high temperature, preferably 96°C to 120°C, more preferably 96°C to 110°C, and even more preferably 96 to 100°C (cast temperature). At this time, it is preferable to press the molten-extruded resin composition against the metal drum with an air knife. The surface in contact with the metal drum is the first surface, and the opposite surface (on the air knife side) is the second surface.

The thickness of the cast sheet is not particularly limited as long as the target polypropylene film can be obtained, but is preferably 0.05 mm to 2 mm, and more preferably 0.1 mm to 1 mm.

In the production process of the cast sheet (particularly in the extruder), polypropylene is more or less subjected to thermal degradation (oxidative degradation) and shear degradation. The degree of progress of such degradation, i.e., changes in the molecular weight distribution and stereoregularity, can be suppressed by nitrogen purge in the extruder (suppression of oxidation), the shape of the screw in the extruder (shear force), the internal shape of the T-die during casting (shear force), the amount of antioxidant added (suppression of oxidation), winding speed during casting (extension force), and the like.

### 2-3. Stretching Treatment

The biaxially stretched polypropylene film can be produced by stretching the cast sheet. The stretching method is preferably a sequential biaxial stretching method. In the sequential biaxial stretching method, first, the cast sheet is kept at a relatively high temperature, preferably 142 to 180°C, more preferably 143 to 160°C (particularly 144 to 160°C), and even more preferably 144 to 150°C (particularly 145 to 150°C), passed through rolls with a speed difference, stretched in the machine direction preferably 3 to 7 times, and more preferably 4 to 6 times, and immediately cooled to room temperature. Subsequently, the stretched film is guided to a tenter, transversely stretched 3 to 11 times (preferably 8 to 11 times) in the traverse direction at a temperature of preferably 150 to 159°C, more preferably 150 to 158°C, and even more preferably 150 to 157°C, then relaxed and heat-fixed, and wound into a roll. By adjusting the stretching temperature in the machine direction (longitudinal stretching temperature) and the stretching temperature in the traverse direction (transverse stretching temperature) within the above ranges, the polypropylene film of the present invention can be more efficiently obtained.

The longitudinal stretching speed is preferably 60000 to 70000%/sec, and more preferably 65000 to 70000%/sec. The transverse stretching speed is preferably 300 to 400%/sec, and more preferably 300 to 350%/sec.

The film wound in a roll is subjected to aging treatment in an atmosphere of about 20 to 45°C, and then slit (cut) into a desired product width by a slitter or the like while being unwound (fed out), and each is wound again.

This stretching step results in a film with excellent mechanical strength and stiffness.

After completion of the stretching and heat-fixing steps, the polypropylene film is preferably subjected to corona discharge treatment on-line or off-line. By performing the corona discharge treatment, it is possible to improve adhesion properties in subsequent steps, such as a metal deposition step. The corona discharge treatment can be performed by using a known method. It is preferable to use air, carbon dioxide gas, nitrogen gas, or a mixed gas thereof as the atmospheric gas.

### 3. Metal Layer-Integrated Polypropylene Film

In one embodiment, the present invention relates to a metal layer-integrated polypropylene film having the polypropylene film of the present invention and a metal layer laminated on one or both sides of the polypropylene film of the present invention (in the present specification, also referred to as "the metal layer-integrated polypropylene film of the present invention"). This is described below.

The metal layer functions as an electrode when the metal layer-integrated polypropylene film of the present invention is used as a capacitor. The metal used in the metal layer can be, for example, an elemental metal such as zinc, lead, silver, chromium, aluminum, copper, or nickel, or a mixture of two or more of these metals, or an alloy thereof. However, zinc and aluminum are preferred, in consideration of environment, economy, capacitor performance, etc.

The thickness of the metal layer is preferably 0.1 to 50 nm, and more preferably 10 to 50 nm. When the thickness of the metal layer is 0.1 to 50 nm, the thickness of the metal layer-integrated polypropylene film of the present invention and the thickness of the polypropylene film of the present invention show similar values in the measurement method described in the Examples.

The layer structure of the metal layer is not particularly limited. The metal layer may be a single layer consisting of one layer, or may be multiple layers having the same or different compositions.

The metal layer-integrated polypropylene film of the present invention can be obtained, for example, by a method comprising laminating a metal layer on one or both sides of the polypropylene film of the present invention.

Examples of the method for laminating a metal layer on one or both sides the polypropylene film of the present invention include vacuum deposition and sputtering. Vacuum deposition is preferable, in terms of productivity, economical efficiency, etc. General examples of vacuum deposition include a crucible method, a wire method, and the like; however, the method is not particularly limited. An optimal method can be suitably selected.

In vacuum deposition, the thickness of the metal layer is controlled by film resistance. As deposition conditions in vacuum deposition, the film resistance can vary depending on the constituent metal of the metal layer. For example, in the case of an aluminum film, the film resistance is, for example, 1 to 30 Ω/sq or 10 to 25 Ω/sq.

The margin pattern when laminating a metal layer by deposition is not particularly limited. In terms of improving capacitor properties, such as fail-safe ability, it is preferable that a pattern containing a so-called special margin, such as a fishnet pattern and/or a T-margin pattern, is applied to one surface of the film. The fail-safe ability is enhanced, and it is effective in terms of preventing the breakage and short-circuit of the capacitor.

The method for forming a margin can be a commonly known method, such as a tape method or an oil method, which can be used with no restrictions.

After a metal layer is laminated on one or both sides of the polypropylene film of the present invention, post-heat treatment may be further performed. Conditions for post-heat treatment include, for example, application of silicon oil heated to 120 to 130°C.

### 4. Capacitor

In one embodiment, the present invention relates to a capacitor comprising the metal layer-integrated polypropylene film of the present invention (in the present specification, also referred to as "the capacitor of the present invention"). This is described below.

The capacitor of the present invention has not only a constant level of capacitance stability for long-term use, but also excellent insulation resistance stability under high-temperature and high-voltage application.

For example, in the capacitor of the present invention, the capacitance change after 1000 hours of voltage application, measured in the lifetime test described in the Examples, is preferably -15% or more, more preferably -12% or more, and even more preferably -10% or more. The upper limit of the capacitance change is not particularly limited, and is, for example, 2%, 1%, 0.5%, 0.2%, or 0%.

For example, in the capacitor of the present invention, the insulation resistance value after 1 minute, measured in the high-voltage test described in the Examples, is preferably 20 MQ or more, more preferably 1000 MQ or more, even more preferably 5000 MQ or more, and still even more preferably 10000 MΩ or more. The upper limit of the insulation resistance value is not particularly limited, and is, for example, 20000 MΩ, 30000 MΩ, or 50000 MΩ.

In one embodiment of the present invention, in the step of preparing a capacitor, for example, winding processing of the film is performed. For example, two metal layer-integrated polypropylene films of the present invention are laminated such that the metal layer in the metal layer-integrated polypropylene film of the present invention and the polypropylene film of the present invention are alternately overlaid, or additionally such that the insulation margin of each film is located, one on one side, and the other on the other side. The laminated pair of films is then wound. In this step, it is preferable to laminate the pair of two metal layer-integrated polypropylene films of the present invention with a shift of 1 to 2 mm. The winder to be used is not particularly limited, and a 3KAW-N2 automatic winder, produced by Kaido Mfg. Co., Ltd., for example, can be used.

In preparing a flat capacitor, after the winding, the obtained wound product is typically pressed. Pressing helps to tighten the roll of the capacitor and/or to form the element. From the viewpoint of controlling and/or stabilizing the gap between the layers, the applied pressure is 2 to 20 kg/cm², although the optimum value varies depending on, for example, the thickness of the film of the present invention.

Subsequently, both edge faces of the wound product are subjected to metal thermal spraying to form metallikon electrodes, thereby preparing a capacitor.

The capacitor is further subjected to a predetermined heat treatment. Specifically, the present invention includes the step of performing heat treatment on the capacitor (which may be, hereinafter, referred to as "heat aging"). The temperature of the heat treatment is, for example, 80 to 190°C, but is not particularly limited thereto. The method of performing the heat treatment on the capacitor may be appropriately selected from known methods including, for example, a method using a constant-temperature chamber in a vacuum atmosphere, and a method using high-frequency induction heating. The time for performing the heat treatment is preferably 1 hour or more, and more preferably 10 hours or more, in terms of obtaining mechanical and thermal stability. In terms of preventing defects in molding such as heat wrinkles and patterning, the time is more preferably 20 hours or less.

Performing the heat treatment can provide the effect of heat aging. Specifically, the gap between the films constituting the capacitor formed from the metal layer-integrated polypropylene film of the present invention decreases, thereby suppressing corona discharge and facilitating the crystallization due to the alteration of the internal structure of the metal layer-integrated polypropylene film of the present invention. This appears to result in further improving the voltage resistance.

Lead wires are typically welded to the metallikon electrodes of a capacitor that has undergone heat aging. The capacitor is preferably encapsulated in a case and potted in epoxy resin to impart weatherability to the capacitor and, in particular, to prevent degradation of the capacitor by moisture.

The capacitor of the present invention using the polypropylene film of the present invention is suitably used in a high-temperature environment, and can be a capacitor that has a small size and a high capacity (e.g., a capacitance of 5 µF or more, preferably 10 µF or more, even more preferably 20 µF or more, still even more preferably 30 µF or more, and particularly preferably 40 µF or more; the upper limit of the capacitance is not particularly limited, and is, for example, 100 µF, 80 µF, 70 µF, or 60 µF). Therefore, the capacitor of the present invention can be used as a high-voltage capacitor, a filter capacitor for various switching power supplies, converters, and inverters, a smoothing capacitor, or the like, all of which are used in electronic devices, electrical devices, etc. In addition, the capacitor of the present invention can also be suitably used as an inverter capacitor, a converter capacitor, or the like that controls the drive motor of an electric vehicle or a hybrid vehicle, for which demand is increasing in recent years.

### Examples

The present invention is described in detail below using Examples; however, the present invention is not limited to the following Examples but is defined by the appended claims.

Unless otherwise specified, parts and % indicate "parts by mass" and "mass%," respectively.

### (1) Preparation of Polypropylene Resins

Table 1 shows polypropylene resins used to produce the biaxially stretched polypropylene films of the Examples and Comparative Examples.

The resins A and B shown in Table 1 are products of Prime Polymer Co., Ltd. The resin C is S802M produced by Korea Petrochemical Ind. Co., Ltd. The resin D is HPT-1 produced by Korea Petrochemical Ind. Co., Ltd. The resin E is HC300BF produced by Borealis. The resins A, B, C, D, and E are all linear homopolypropylene resins. The resin F is a long-chain branched polypropylene resin MFX6 produced by Japan Polypropylene Corporation.

Table 1 shows the number average molecular weight (Mn), weight average molecular weight (Mw), z-average molecular weight (Mz), molecular weight distribution (Mw/Mn), molecular weight distribution (Mz/Mn), melt flow rate (MFR), and heptane insoluble (HI) of the linear homopolypropylene resins A, B, C, D, and E. These are values in the form of raw material resin pellets. The measurement methods are as shown below.

### (1-1) Measurement of Number Average Molecular Weight (Mn), Weight Average Molecular Weight (Mw), Z-Average Molecular Weight (Mz), Molecular Weight Distribution (Mw/Mn), and Molecular Weight Distribution (Mz/Mn) of Linear Polypropylene Resins

The number average molecular weight (Mn), weight average molecular weight (Mw), z-average molecular weight (Mz), molecular weight distribution (Mw/Mn), and molecular weight distribution (Mz/Mn) of each resin were measured by GPC (gel permeation chromatography) under the following conditions.

Specifically, a high-temperature GPC system with a built-in differential refractometer (RI) (HLC-8121GPC-HT, produced by Tosoh Corporation) was used. As columns, three connected TSKgel GMHHR-H(20)HT columns, produced by Tosoh Corporation, were used. The measurement was performed at a column temperature of 140°C while flowing trichlorobenzene as an eluent at a flow rate of 1.0 ml/min. A calibration curve for the molecular weight M was created using a polystyrene standard produced by Tosoh Corporation, and the measurement value was converted to the molecular weight of polypropylene using a Q-factor to obtain the number average molecular weight (Mn), weight average molecular weight (Mw), and z-average molecular weight (Mz). The values of Mw and Mn were used to obtain the molecular weight distribution (Mw/Mn). Further, the values of Mz and Mn were used to obtain the molecular weight distribution (Mz/Mn).

### (1-2) Measurement of Melt Flow Rate (MFR)

The melt flow rate (MFR) of each resin in the form of the raw material resin pellets was measured by the melt indexer of Toyo Seiki Co., Ltd. according to the condition M of JIS K 7210. Specifically, first, a sample weighed to 4 g was inserted into a cylinder at a test temperature of 230°C, and preheated under a load of 2.16 kg for 3.5 minutes. Then, the weight of the sample extruded from the bottom hole for 30 seconds was measured, and MFR (g/10 min) was determined. The above measurements were repeated 3 times, and the average value was taken as the measured value of MFR. Table 1 shows the results.

### (1-3) Measurement of Heptane Insoluble (HI)

Each resin was press-molded to 10 mm × 35 mm × 0.3 mm to prepare about 3 g of a measurement sample. Next, about 150 mL of heptane was added, and Soxhlet extraction was performed for 8 hours. The heptane insoluble was calculated from the sample mass before and after extraction. Table 1 shows the results.

### (1-4) Physical Property Values of Polypropylene Resins

**Table 1**

| | Mn ×10³ | Mw ×10⁸ | Mz × 10³ | Mw/Mn | Mz/Mn | MFR g/10 min | HI % |
|---|---|---|---|---|---|---|---|
| Resin A | 47 | 270 | 750 | 5.7 | 16.0 | 5.6 | 97.8 |
| Resin B | 34 | 340 | 1400 | 10.0 | 41.2 | 4.9 | 97.3 |
| Resin C | 46 | 380 | 1600 | 8.3 | 34.8 | 2.3 | 98.8 |
| Resin D | 44 | 350 | 1600 | 8.0 | 36.4 | 3.8 | 98.6 |
| Resin E | 42 | 340 | 1500 | 8.1 | 35.7 | 4.0 | 98.5 |

### (2) Production of Biaxially Stretched Polypropylene Films

Using the above resins, the biaxially stretched polypropylene films of the Examples and Comparative Examples were produced in the following manner.

### Example 1

The resins A and C were dry-blended. The mixing ratio was at a mass ratio of (resin A):(resin C) = 75:25. Then, the dry-blended resin was melted at a resin temperature of 270°C, then extruded through a T-die, and wound around a metal drum kept at a surface temperature of 98°C for solidification. As a result, a cast sheet with a thickness of 115 µm was produced. At this time, the cast sheet was produced while pressing the melt-extruded resin composition against the metal drum with an air knife. The resulting unstretched cast sheet was kept at a temperature of 146°C, passed through rolls with a speed difference, stretched 5 times in the machine direction at a stretching speed of 67300%/sec, and immediately cooled to room temperature. Subsequently, the stretched film was guided to a tenter, stretched 10 times in the traverse direction at a temperature of 155°C and a stretching speed of 335%/sec, and then relaxed and heat-fixed. Then, after the film surface (on the metal drum contact surface side) was subjected to corona discharge treatment in the air at a treatment speed of 25 W·min/m², the film was wound and subjected to aging treatment in an atmosphere of about 30°C. As a result, a biaxially stretched polypropylene film with a thickness of 2.3 µm was obtained.

### Example 2

A biaxially stretched polypropylene film with a thickness of 2.3 µm was obtained in the same manner as in Example 1, except that the temperature of the metal drum was set to 97°C.

### Example 3

A biaxially stretched polypropylene film with a thickness of 2.3 µm was obtained in the same manner as in Example 1, except that the temperature of the metal drum was set to 96°C.

### Example 4

A biaxially stretched polypropylene film with a thickness of 2.3 µm was obtained in the same manner as in Example 1, except that a dry-blended resin of the resins B and D at a mass ratio of (resin B):(resin D) = 65:35 was used, and the temperature of the metal drum was set to 99°C.

### Example 5

A biaxially stretched polypropylene film with a thickness of 2.5 µm was obtained in the same manner as in Example 1, except that only the resin E was used in place of the dry-blended resin, the temperature of the metal drum was set to 97°C, the unstretched cast sheet was kept at a temperature of 145°C, passed through rolls with a speed difference, and stretched 5 times in the machine direction, and the thickness of the cast sheet was set to 125 µm.

### Example 6

A biaxially stretched polypropylene film with a thickness of 2.3 µm was obtained in the same manner as in Example 4, except that the temperature of the metal drum was set to 98°C.

### Example 7

A biaxially stretched polypropylene film with a thickness of 2.3 µm was obtained in the same manner as in Example 1, except that a dry-blended resin of the resins B and C at a mass ratio of (resin B):(resin D) = 65:35 was used, the temperature of the metal drum was set to 96°C, and the unstretched cast sheet was kept at a temperature of 145°C, passed through rolls with a speed difference, and stretched 5 times in the machine direction.

### Comparative Example 1

The resins A and C were dry-blended. The mixing ratio was at a mass ratio of (resin A):(resin C) = 75:25. Then, the dry-blended resin was melted at a resin temperature of 250°C, then extruded through a T-die, and wound around a metal drum kept at a surface temperature of 92°C for solidification. As a result, a cast sheet with a thickness of 115 µm was produced. At this time, the cast sheet was produced while pressing the melt-extruded resin composition against the metal drum with an air knife. The resulting unstretched cast sheet was kept at a temperature of 140°C, passed through rolls with a speed difference, stretched 5 times in the machine direction at a stretching speed of 67300%/sec, and immediately cooled to room temperature. Subsequently, the stretched film was guided to a tenter, stretched 10 times in the traverse direction at a temperature of 155°C and a stretching speed of 335%/sec, and then relaxed and heat-fixed. Then, after the film surface (on the metal drum contact surface side) was subjected to corona discharge treatment in the air at a treatment speed of 25 W·min/m², the film was wound and subjected to aging treatment in an atmosphere of about 30°C. As a result, a biaxially stretched polypropylene film with a thickness of 2.3 µm was obtained.

### Comparative Example 2

A biaxially stretched polypropylene film with a thickness of 2.3 µm was obtained in the same manner as in Comparative Example 1, except that the temperature of the metal drum was set to 91°C.

### Comparative Example 3

A biaxially stretched polypropylene film with a thickness of 2.5 µm was obtained in the same manner as in Comparative Example 1, except that a dry-blended resin of the resins B and D at a mass ratio of (resin B):(resin D) = 65:35 was used, the unstretched cast sheet was passed through rolls with a speed difference and stretched 5 times in the machine direction at a stretching speed of 57600%/sec, the stretched film was guided to a tenter and stretched 10 times in the traverse direction at a temperature of 165°C and a stretching speed of 305%/sec, and the thickness of the cast sheet was set to 125 µm.

### Comparative Example 4

A biaxially stretched polypropylene film with a thickness of 2.5 µm was obtained in the same manner as in

Comparative Example 1, except that the temperature of the metal drum was set to 95°C, the unstretched cast sheet was kept at a temperature of 130°C, passed through rolls with a speed difference, and stretched 4 times in the machine direction at a stretching speed of 46000%/sec, the stretched film was guided to a tenter and stretched 10 times in the traverse direction at a temperature of 160°C and a stretching speed of 300%/sec, and the thickness of the cast sheet was set to 125 µm.

### Comparative Example 5

A biaxially stretched polypropylene film with a thickness of 2.3 µm was obtained in the same manner as in Comparative Example 1, except that a dry-blended resin of the resins B, C, and F at a mass ratio of (resin B):(resin C):(resin F) = 63:34:3 was used.

### (3) Measurement of Physical Properties of Biaxially Stretched Polypropylene Films

### (3-1) Measurement of Thickness of Biaxially Stretched Polypropylene Films

The thickness of the biaxially stretched polypropylene films of the Examples and Comparative Examples was measured. Specifically, the film thickness was measured according to JIS-C2330, except that the thickness was measured at 100 ± 10 kPa using a paper thickness measuring instrument MEI-11, produced by Citizen Seimitsu Co., Ltd. Table 2 shows the results.

### (3-2) Measurement of Haze of Biaxially Stretched Polypropylene Films

The haze (unit: %) of the biaxially stretched polypropylene films of the Examples and Comparative Examples was measured using a haze meter (NDH-5000, produced by Nippon Denshoku Industries Co., Ltd.) according to JIS K 7136:2000. The sample was cut out from the roll, and the size of the sample was 50 mm in the MD direction and 100 mm in the TD direction. Table 2 shows the results.

### (3-3) Measurement of Various Surface Parameters Specified in ISO 25178

For the biaxially stretched polypropylene films of the Examples and Comparative Examples, the peak extreme height Sxp, five-point peak height S5p, root mean square gradient Sdq, developed interfacial area ratio Sdr, arithmetical mean height Sa, and root-mean-square height Sq specified in ISO 25178 were measured in the following manner. The measurements were performed on both surfaces of each film. In the following, a surface with a larger Sa is referred to as "A surface (roughened surface)," and a surface with a smaller Sa is referred to as "B surface (non-roughened surface)."

An optical interference-type non-contact surface shape measuring instrument (VertScan 2.0 (model: R5500GML), produced by Ryoka Systems Inc.) was used. Using the WAVE mode, a 530 white filter and a 1×BODY lens barrel were applied, and a 10x objective lens was used to measure 470.92 µm x 353.16 µm per field of view. This operation was performed at 10 locations at 1-cm intervals in the machine direction from the center of the target sample (polypropylene film) in both the machine and traverse directions.

Next, the obtained data was subjected to noise removal processing using a median filter (3 x 3), and after that, Gaussian filtering with a cutoff value of 30 µm was performed to remove the waviness component. This enabled the condition of the roughened surface to be properly measured.

Next, analysis was performed using the plug-in function ISO parameter of analysis software VS-Viewer of VertScan 2.0 to determine Sxp, S5p, Sdq, Sdr, Sa, and Sq for each surface. Here, the values for the A surface and B surface are respectively referred to as, for example, Sxp_{A} and Sxp_{B}. Finally, an average value was calculated for the values (Sxp_{A}, Sxp_{B}, S5p_{A}, S5P_{B}, Sdq_{A}, Sdq_{B}, Sdr_{A}, Sdr_{B}, Sa_{A}, Sa_{B}, Sq_{A}, and Sq_{B}) obtained at the above 10 locations. Table 2 shows the results.

The peak extreme height Sxp was determined as the difference in height Sxp = Sdc(p)-Sdc(q) designated at a load area ratio p = 2.5% and q = 50% on the load curve.

Table 2 shows the results.

### (3-4) Physical Property Values of Biaxially Stretched Polypropylene Films

**Table 2**

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Film thickness / µm | | 2.3 | 2.3 | 2.3 | 2.3 | 2.5 | 2.3 | 2.3 | 2.3 | 2.3 | 2.5 | 2.5 | 2.3 |
| Haze / % | | 3.1 | 2.7 | 2.6 | 4.0 | 2.7 | 3.5 | 2.2 | 1.7 | 1.3 | 2.0 | 2.1 | 1.8 |
| Peak extreme height Sxp / µm | A surface (roughened surface) Sxp_{A} | 0.057 | 0.046 | 0.040 | 0.111 | 0.053 | 0.072 | 0.045 | 0.030 | 0.028 | 0.022 | 0.034 | 0.024 |
| | B surface (non-roughened surface) Sxp_{B} | 0.030 | 0.030 | 0.030 | 0.054 | 0.035 | 0.053 | 0.031 | 0.021 | 0.018 | 0.012 | 0.027 | 0.009 |
| Five-point peak height S5p / µm | A surface (roughened surface) S5p_{A} | 0.78 | 0.67 | 0.55 | 0.86 | 0.52 | 0.54 | 0.51 | 0.36 | 0.37 | 0.31 | 0.40 | 0.06 |
| | B surface (non-roughened surface) S5p_{B} | 0.39 | 0.46 | 0.36 | 0.21 | 0.28 | 0.27 | 0.19 | 0.18 | 0.09 | 0.08 | 0.17 | 0.01 |
| Root mean square gradient Sdq | A surface (roughened surface) Sdq_{A} | 0.085 | 0.066 | 0.050 | 0.164 | 0.059 | 0.101 | 0.051 | 0.029 | 0.022 | 0.031 | 0.074 | 0.033 |
| | B surface (non-roughened surface) Sdq_{B} | 0.048 | 0.050 | 0.050 | 0.048 | 0.008 | 0.044 | 0.014 | 0.014 | 0.005 | 0.018 | 0.035 | 0.006 |
| Developed interfacial area ratio Sdr / % | A surface (roughened surface) Sdr_{A} | 0.217 | 0.150 | 0.089 | 0.316 | 0.132 | 0.201 | 0.103 | 0.030 | 0.022 | 0.061 | 0.067 | 0.082 |
| | B surface (non-roughened surface) Sdr_{B} | 0.076 | 0.082 | 0.082 | 0.086 | 0.004 | 0.051 | 0.012 | 0.009 | 0.001 | 0.023 | 0.034 | 0.065 |
| Arithmetical mean height Sa / µm | A surface (roughened surface) Sa_{A} | 0.017 | 0.014 | 0.012 | 0.034 | 0.018 | 0.025 | 0.015 | 0.010 | 0.009 | 0.010 | 0.013 | 0.011 |
| | B surface (non-roughened surface) Sa_{B} | 0.009 | 0.009 | 0.009 | 0.018 | 0.011 | 0.018 | 0.010 | 0.007 | 0.006 | 0.007 | 0.009 | 0.007 |
| Root-mean-square height Sq / µm | A surface (roughened surface) Sq_{A} | 0.059 | 0.048 | 0.036 | 0.086 | 0.038 | 0.059 | 0.033 | 0.023 | 0.020 | 0.025 | 0.042 | 0.025 |
| | B surface (non-roughened surface) Sq_{B} | 0.034 | 0.036 | 0.028 | 0.035 | 0.016 | 0.033 | 0.015 | 0.014 | 0.009 | 0.011 | 0.024 | 0.016 |

### (4) Evacuation

### (4-1) Yield Evaluation of Cut Film Rolls

Films were unwound from the uncut film rolls obtained in the Examples and Comparative Examples, and cut with a slitter in the traverse direction. When the cut polypropylene film was wound, a fiber-reinforced plastic core having an outer diameter of 176 mm was used, and the polypropylene film was wound while applying surface pressure thereto using a winding device provided with a contact pressure roll. The cutting conditions were a speed of 300 m/min, an unwinding tension of 40 N/m, a winding tension of 50 N/m, and a winding surface pressure of 400 N/m. The contact pressure roll used was made of rubber and had an outer diameter of 152 mm and a surface hardness of 40°. A biaxially stretched polypropylene roll (cut film roll) with a width of 620 mm and a length of 75,000 m was finished.

In the production of the cut film rolls, the films were visually observed during winding, and those with wrinkles were all rejected. Regarding winding deviation, when observed from the end surface of the cut rolls, those with a deviation of 2 mm or more were rejected. The ratio of the number of cut film rolls that passed the above criteria to all of the cut rolls was calculated as the cutting yield rate α, and evaluated according to the following criteria. Table 3 shows the results.
A: $α = 100 %$
B: $100 % > α \geq 80 %$
C: $80 % > α .$

### (4-2) Evaluation of Capacitor Performance

The biaxially stretched polypropylene film rolls obtained in the Examples and Comparative Examples were used to produce capacitors as shown below. A special deposition pattern margin and an insulation margin for imparting film capacitor fail-safe ability were formed on each biaxially stretched polypropylene film using a vacuum deposition machine produced by ULVAC, and aluminum deposition was applied so that the metal film had a surface resistivity of 20Ω/□, thereby obtaining a metallized film. After the metallized film was silt to an arbitrary width, the two metallized films were combined and wound using a 3KAW-N2 automatic winder (produced by Kaido Mfg. Co., Ltd.) at a winding speed of 4 m/sec, a winding tension of 180 g, and a contact roller contact pressure of 260 g while setting the number of turns so that the element capacitance was 50 µF. After the element-wound element was pressed and flattened, zinc metal was sprayed on the element end surface to form an electrode extraction portion while the press load was applied, followed by heat treatment at 120°C for 15 hours for thermal curing. After thermal curing, leads were soldered to the element end surface and sealed with epoxy resin to obtain a flat film capacitor. The capacitance of all of the obtained capacitors was 50 µF (± 3 µF). The obtained capacitors were used in the following two tests.

### (4-2-1) High Voltage Test of Capacitor

A direct voltage of 1200 V was continuously applied to the obtained capacitor in a high-temperature chamber at 105°C for 10 minutes. A shielding box SME-8350 was connected to a super megohmmeter (DSM8104, produced by Hioki E.E. Corp.), the capacitor element after 10 minutes was placed in the shielding box, a direct voltage of 500 V was applied, and the insulation resistance value (IR10) was read after 1 minute. The test was conducted using 2 samples, and the average value of the insulation resistance values (IR10) was evaluated according to the following criteria. Table 3 shows the results. Measurement conditions other than those described here were according to "4.2.4 Insulation Resistance" of JIS C 5101-16:2009.
A: $IR 10 \geq 5000 M Ω$
B: $5000 M Ω > IR 10 \geq 20 M Ω$
C: $20 M Ω > IR 10 .$

### (4-2-2) Capacitor Lifetime Test (Capacitance Change)

The initial capacitance (C0) of the obtained capacitor before the test was evaluated by an LCR Hi-Tester 3522-50 (produced by Hioki E.E. Corp.). Next, a direct voltage of 325 V/µm was continuously applied to the capacitor in a constant-temperature chamber at 115°C for 1000 hours. The capacitance of the capacitor after 1000 hours (C1000) was measured in the same manner, and the capacitance change before and after voltage application (ΔC) was calculated by the following formula: ΔC = (C1000-C0)/C0. The test was conducted using 2 samples, and the average value of their capacitance changes (ΔC) were evaluated according to the following criteria. Table 3 shows the results.
A: $Δ C \geq - 10 %$
B: $- 10 % > Δ C \geq - 15 %$
C: $- 15 % > Δ C .$

**Table 3**

| | Example | | | | | | | Comparative Example | | | | |
|---|---|---|---|---|---|---|---|---|---|---|---|---|
| | 1 | 2 | 3 | 4 | 5 | 6 | 7 | 1 | 2 | 3 | 4 | 5 |
| Yield evaluation of cut film roll | A | A | A | A | A | A | A | B | C | C | B | C |
| Evaluation of capacitor high voltage test | A | A | A | A | B | B | B | C | C | C | C | C |
| Evaluation of capacitor lifetime test | A | B | B | B | B | B | A | C | C | B | C | B |

## Claims

1. A polypropylene film having a first surface and a second surface,
the arithmetical mean height Sa of the first surface being higher than the arithmetical mean height Sa of the second surface,
the first surface having the peak extreme height Sxp of 0.04 to 0.12 µm, and
the first surface having the five-point peak height S5p of 0.5 to 1.2 µm, these parameters being specified in ISO 25178.

2. The polypropylene film according to claim 1, wherein the first surface has the root mean square gradient Sdq of 0.04 to 0.19.

3. The polypropylene film according to claim 1 or 2, wherein the first surface has the developed interfacial area ratio Sdr of 0.02 to 0.50%.

4. The polypropylene film according to any one of claims 1 to 3, wherein the first surface has the arithmetical mean height Sa of 0.008 to 0.05 µm.

5. The polypropylene film according to any one of claims 1 to 4, wherein the first surface has the root mean square height Sq of 0.02 to 0.12 µm.

6. The polypropylene film according to any one of claims 1 to 5, which has the haze value of 2.2 to 5.0%.

7. The polypropylene film according to any one of claims 1 to 6, which has the thickness of 0.8 to 9.5 µm.

8. The polypropylene film according to any one of claims 1 to 7, which is a biaxially stretched film.

9. The polypropylene film according to any one of claims 1 to 8, which is a monolayer film.

10. The polypropylene film according to any one of claims 1 to 9, which is for use in a capacitor.

11. A metal layer-integrated polypropylene film comprising the polypropylene film according to any one of claims 1 to 10 and a metal layer laminated on one or both sides of the polypropylene film.

12. A capacitor comprising the metal layer-integrated polypropylene film according to claim 11.

## Patentansprüche

1. Polypropylenfolie mit einer ersten Oberfläche und einer zweiten Oberfläche, wobei die arithmetische mittlere Höhe Sa der ersten Oberfläche höher als die arithmetische mittlere Höhe Sa der zweiten Oberfläche ist,
wobei die erste Oberfläche die Spitzenextremhöhe Sxp von 0,04 bis 0,12 µm aufweist und
die erste Oberfläche die Fünf-Punkt-Spitzenhöhe S5p von 0,5 bis 1,2 µm aufweist, wobei diese Parameter in ISO 25178 spezifiziert sind.

2. Polypropylenfolie nach Anspruch 1, wobei die erste Oberfläche den quadratischen mittleren Gradienten Sdq von 0,04 bis 0,19 aufweist.

3. Polypropylenfolie nach Anspruch 1 oder 2, wobei die erste Oberfläche das entwickelte Grenzflächenverhältnis Sdr von 0,02 bis 0,50 % aufweist.

4. Polypropylenfolie nach einem der Ansprüche 1 bis 3, wobei die erste Oberfläche die arithmetische mittlere Höhe Sa von 0,008 bis 0,05 µm aufweist.

5. Polypropylenfolie nach einem der Ansprüche 1 bis 4, wobei die erste Oberfläche die mittlere quadratische Höhe Sq von 0,02 bis 0,12 µm aufweist.

6. Polypropylenfolie nach einem der Ansprüche 1 bis 5, welche den Trübungswert von 2,2 bis 5,0 % aufweist.

7. Polypropylenfolie nach einem der Ansprüche 1 bis 6, welche die Dicke von 0,8 bis 9,5 µm aufweist.

8. Polypropylenfolie nach einem der Ansprüche 1 bis 7, welche eine biaxial gestreckte Folie ist.

9. Polypropylenfolie nach einem der Ansprüche 1 bis 8, welche eine einschichtige Folie ist.

10. Polypropylenfolie nach einem der Ansprüche 1 bis 9, welche für die Verwendung in einem Kondensator ist.

11. Metallschichtintegrierte Polypropylenfolie, umfassend die Polypropylenfolie nach einem der Ansprüche 1 bis 10 und eine auf einer oder beiden Seiten der Polypropylenfolie laminierte Metallschicht.

12. Kondensator, umfassend die metallschichtintegrierte Polypropylenfolie nach Anspruch 11.

## Revendications

1. Film de polypropylène ayant une première surface et une seconde surface, la hauteur moyenne arithmétique Sa de la première surface étant supérieure à la hauteur moyenne arithmétique Sa de la seconde surface,
la première surface ayant la hauteur des pics principaux Sxp de 0,04 à 0,12 µm, et
la première surface ayant la hauteur des cinq principaux pics S5p de 0,5 à 1,2 µm, ces paramètres étant spécifiés dans ISO 25178.

2. Film de polypropylène selon la revendication 1, dans lequel la première surface a le gradient moyen quadratique Sdq de 0,04 à 0,19.

3. Film de polypropylène selon la revendication 1 ou 2, dans lequel la première surface a le rapport d'air interfaciale développée Sdr de 0,02 à 0,50 %.

4. Film de polypropylène selon l'une quelconque des revendications 1 à 3, dans lequel la première surface a la hauteur moyenne arithmétique Sa de 0,008 à 0,05 µm.

5. Film de polypropylène selon l'une quelconque des revendications 1 à 4, dans lequel la première surface a la hauteur moyenne quadratique Sq de 0,02 à 0,12 µm.

6. Film de polypropylène selon l'une quelconque des revendications 1 à 5, qui a la valeur de turbidité de 2,2 à 5,0 %.

7. Film de polypropylène selon l'une quelconque des revendications 1 à 6, qui a l'épaisseur de 0,8 à 9,5 µm.

8. Film de polypropylène selon l'une quelconque des revendications 1 à 7, qui est un film à étirement biaxial.

9. Film de polypropylène selon l'une quelconque des revendications 1 à 8, qui est un film monocouche.

10. Film de polypropylène selon l'une quelconque des revendications 1 à 9, qui est destiné à être utilisé dans un condensateur.

11. Film de polypropylène à intégration de couche métallique comprenant le film de polypropylène selon l'une quelconque des revendications 1 à 10 et une couche métallique stratifiée sur un ou les deux côtés du film de polypropylène.

12. Condensateur comprenant le film de polypropylène à intégration de couche métallique selon la revendication 11.
